# EUROPEAN PATENT APPLICATION

(11) **EP 4 503 225 A1**
(43) Date of publication of application: **05.02.2025**
(21) Application number: 24187969.1
(22) Date of filing: 11.07.2024
(51) Int. Cl.: H01M 10/0525, H01M 10/0567, H01M 10/0568, H01M 10/0569

(54) **ELECTROLYTE FOR RECHARGEABLE LITHIUM BATTERY AND RECHARGEABLE LITHIUM BATTERY INCLUDING THE SAME**

(30) Priority: 04.08.2023 KR 20230102413
(71) Applicant: SAMSUNG SDI CO., LTD., Giheung-gu Yongin-si, Gyeonggi-do 17084 (KR); Korea Advanced Institute of Science and Technology, Daejeon 34141 (KR)
(72) Inventor: Bae, Tae Hyon, 17084 Yongin-si, Gyeonggi-do (KR); Lee, Harim, 17084 Yongin-si, Gyeonggi-do (KR); Kim, Sanghyung, 17084 Yongin-si, Gyeonggi-do (KR); Goh, Aehui, 17084 Yongin-si, Gyeonggi-do (KR); Son, Seunghyeon, 17084 Yongin-si, Gyeonggi-do (KR); Yu, Arum, 17084 Yongin-si, Gyeonggi-do (KR); Kim, Sanghoon, 17084 Yongin-si, Gyeonggi-do (KR); Choi, Nam-Soon, 34141 Yuseong-gu, Daejeon (KR); Kim, Saehun, 34141 Yuseong-gu, Daejeon (KR); Lee, Jeong-A, 34141 Yuseong-gu, Daejeon (KR)
(74) Representative: Gulde & Partner

(57) **Abstract**

Disclosed are an electrolyte for a rechargeable lithium battery and a rechargeable lithium battery including the same, wherein the electrolyte includes a non-aqueous organic solvent and a lithium salt, wherein the non-aqueous organic solvent includes two or more propionate-based solvents, and the propionate-based solvents include alkyl fluorinated propionate and propyl propionate.

## Description

### BACKGROUND

### (a) Field

Electrolytes for a rechargeable lithium battery and rechargeable lithium batteries including the same are disclosed.

### (b) Description of the Related Art

Recently, with the rapid spread of electronic devices that use batteries, such as, for example, mobile phones, laptop computers, and electric vehicles, use for rechargeable batteries having high energy density and high capacity is rapidly increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte, and electrical energy is produced through oxidation and reduction reactions if lithium ions are intercalated/deintercalated from the positive and negative electrodes.

An electrolyte has used a carbonate-based non-aqueous organic solvent, but the carbonate-based non-aqueous organic solvent has a high tendency to be electrochemically oxidized and decomposed under high charge voltage conditions. Accordingly, the electrolyte using the carbonate-based non-aqueous organic solvent may not only cause a side reaction on the positive electrode surface to form a resistance layer but also a problem of gas generation, electrolyte depletion, and/or the like and thus continuously deteriorate cycle-life characteristics of a rechargeable lithium battery.

### SUMMARY

The invention is defined by the appended claims. The description that follows is subjected to this limitation. Any disclosure lying outside the scope of said claims is only intended for illustrative as well as comparative purposes. Some embodiments of the present disclosure provide an electrolyte for a rechargeable lithium battery including a non-aqueous organic solvent that has a low reduction potential and high oxidation resistance.

The present invention provides an electrolyte for a rechargeable lithium battery as defined in claim 1 including a non-aqueous organic solvent and a lithium salt, wherein the non-aqueous organic solvent includes two or more propionate-based solvents, and the propionate-based solvents include alkyl fluorinated propionate and propyl propionate.

According to another aspect of the present invention there is provided a rechargeable lithium battery including the electrolyte.

The electrolyte for a rechargeable lithium battery of some embodiments can form a stable SEI film on the surface of the negative electrode and suppress or reduce side reactions on the surface of the positive electrode.

Accordingly, a rechargeable lithium battery using the electrolyte can exhibit excellent cycle-life characteristics even if the charging voltage is increased.

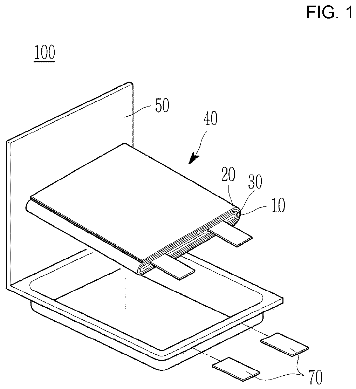

### BRIEF DESCRIPTION OF THE DRAWING

The accompanying drawing, together with the specification, illustrates embodiments of the subject matter of the present disclosure, and, together with the description, serve to explain principles of embodiments of the subject matter of the present disclosure.

The accompanying drawing is a schematic view showing a rechargeable lithium battery according to some embodiments of the present disclosure.

### DETAILED DESCRIPTION OF THE EMBODIMENTS

Hereinafter, embodiments of the present disclosure will be described in more detail. However, these embodiments are examples, the present disclosure is not limited thereto and the present disclosure is defined by the scope of the appended claims, and equivalents thereof.

As used herein, if specific definition is not otherwise provided, it will be understood that if an element such as a layer, film, region, or substrate is referred to as being "on" another element, it can be directly on the other element or intervening elements may also be present.

As used herein, "combination thereof" may mean a mixture of constituents, a stack, a composite, a copolymer, an alloy, a blend, and/or a reaction product.

### Electrolyte

Some embodiments provide an electrolyte for a rechargeable lithium battery including a non-aqueous organic solvent that has a low reduction potential and high oxidation resistance.

Some embodiments provide an electrolyte for a rechargeable lithium battery including a non-aqueous organic solvent and a lithium salt, wherein the non-aqueous organic solvent includes two or more propionate-based solvents, and the propionate-based solvents include alkyl fluorinated propionate and propyl propionate.

The electrolyte for a rechargeable lithium battery of some embodiments can form a stable SEI film on the surface of the negative electrode and suppress or reduce side reactions on the surface of the positive electrode.

Accordingly, a rechargeable lithium battery using the electrolyte can exhibit excellent cycle-life characteristics even if the charging voltage is increased.

### Propionate-based Solvent

The non-aqueous organic solvent includes two or more propionate-based solvents, and the propionate-based solvents include alkyl fluorinated propionate and propyl propionate.

The propionate-based solvent has higher electrochemical stability compared to the carbonate-based solvent, and thus side reactions can be reduced even if the charge and discharge cycle of the rechargeable lithium battery is repeated. These can be confirmed from the battery capacity retention rate after a long charge and discharge cycle of a rechargeable lithium battery, the amount of decomposition products of lithium salt, etc.

The alkyl fluorinated propionate has a low reduction potential and can protect the negative electrode by forming a robust LiF-rich solid electrolyte interphase (SEI) on the negative electrode. In some embodiments, the alkyl fluorinated propionate has high oxidation resistance, suppresses or reduces side reactions between the positive electrode and the electrolyte, and prevents or reduces deterioration of the positive electrode. Therefore, the alkyl fluorinated propionate suppresses or reduces deterioration of the positive electrode as well as the negative electrode even in a high voltage environment and improves cycle-life of the rechargeable lithium battery.

In some embodiments, the alkyl fluorinated propionate may be represented by Chemical Formula 1:

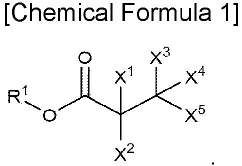

In Chemical Formula 1, R¹ is a C1 to C10 alkyl group.

For example, R¹ may be a methyl group.

In Chemical Formula 1, X¹ to X⁵ are the same or different, and are each independently be a hydrogen atom or a fluorine atom, wherein at least one of X¹ to X⁵ is a fluorine atom.

For example, three or more of X¹ to X⁵ may be fluorine atoms.

Representative examples of Chemical Formula 1 are as follows:

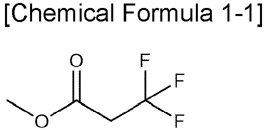

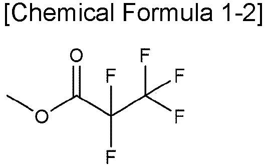

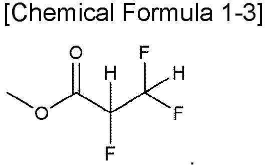

The alkyl fluorinated propionate represented by Chemical Formula 1-1 is methyl 3,3,3-trifluoropropionate (MTIP), the alkyl fluorinated propionate represented by Chemical Formula 1-2 is methyl 2,2,3,3,3-pentafluoropropionate, and the alkyl fluorinated propionate represented by Chemical Formula 1-3 is methyl 2,3,3-trifluoropropionate. Using at least one selected from Chemical Formulae 1-1 to 1-3 can suppress or reduce deterioration of not only the negative electrode but also the positive electrode and improve cycle-life of the rechargeable lithium battery.

Based on 100 volume% of the non-aqueous organic solvent, the alkyl fluorinated propionate may be included in an amount of 1 volume% to 30 volume%, 5 volume% to 30 volume%, 10 volume% to 30 volume%, or 15 volume% to 30 volume%; and the propyl propionate may be included in an amount of 30 volume% to 90 volume%, 40 volume% to 80 volume%, 50 volume% to 65 volume%, or 50 volume% to 60 volume%.

In some embodiments, in the propionate-based solvent, a volume ratio of the alkyl fluorinated propionate and the propyl propionate may be 1:1 to 1:9, 1:1.5 to 1:8, 1:2 to 1:7, or 1:2 to 1:4.

Within the above ranges, even if the charging voltage is increased, oxidative decomposition of the propionate-based solvent may be suppressed or reduced.

The propionate-based solvent may include only two types (or kinds) of the alkyl fluorinated propionate and the propyl propionate, but may optionally further include methyl propionate, ethyl propionate, or a combination thereof.

### Carbonate-based Solvent

The non-aqueous organic solvent may further include a carbonate-based solvent.

The carbonate-based non-aqueous organic solvent may be a cyclic carbonate-based non-aqueous organic solvent and/or a chain carbonate-based non-aqueous organic solvent. In some embodiments, the carbonate-based non-aqueous organic solvent may include at least one selected from a cyclic carbonate-based non-aqueous organic solvent including ethylene carbonate (EC), propylene carbonate (PC), butylene carbonate (BC), or a combination thereof; a linear carbonate-based non-aqueous organic solvent including dimethyl carbonate (DMC), diethyl carbonate (DEC), dipropyl carbonate (DPC), methylpropyl carbonate (MPC), ethylpropyl carbonate (EPC), methylethyl carbonate (MEC), or a combination thereof. In some embodiments, if using a carbonate-based solvent, cyclic carbonate and chain carbonate can be mixed together and used, and cyclic carbonate and chain carbonate may be mixed together at a volume ratio of 1:1 to 1:9.

A volume ratio of the carbonate-based solvent and the propionate-based solvent may be 1:2 to 1:3. In some embodiments, the propionate-based solvent may function as a "main solvent" and the carbonate-based solvent may function as an "auxiliary solvent."

### Lithium Salt

The lithium salt is dissolved in an organic solvent, supplies a battery with lithium ions, basically operates the rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₚF₂ₚ₊₁SO₂)(C_{q}F_{2q+1}SO₂) (wherein p and q are integers from 1 to 20), lithium trifluoromethane sulfonate, lithium tetrafluoroethanesulfonate, lithium difluorobis(oxalato)phosphate. (LiDFOB), and lithium bis(oxalato)borate (LiBOB).

A concentration of the lithium salt may be used within the range of 0.1 M to 2.0 M. If the concentration of lithium salt is within the above range, the electrolyte has suitable or appropriate ionic conductivity and viscosity, and thus excellent performance can be achieved and lithium ions can move effectively.

### Additives

The electrolyte may further include a carbonate-based additive, a sultone-based additive, a nitrile-based additive, a lithium salt-based additive, or a combination thereof to improve battery cycle-life.

The carbonate-based additive may include vinylene carbonate and/or an ethylene carbonate-based compound.

Examples of the ethylene carbonate-based compound may include fluoroethylene carbonate, difluoroethylene carbonate, vinylethylene carbonate, chloroethylene carbonate, dichloroethylene carbonate, bromoethylene carbonate, dibromoethylene carbonate, nitroethylene carbonate, cyanoethylene carbonate, and the like.

The nitrile-based additive may include a dinitrile-based compound, a polynitrile-based compound, or a combination thereof.

Examples of the dinitrile-based compound may include succinonitrile (SN), glutaronitrile, adiponitrile (AN), pimelonitrile, octandinitrile, nonandinitrile, caprylnitrile, ethylene glycol bis(propionitrile) ether (nitrile ether), fumaronitrile, and the like.

Examples of the polynitrile-based compound may include 1, 3, 6-hexanetrinitrile (HTCN), 1, 2, 6-hexanetrinitrile, 1, 3, 5-pentanetrinitrile, nonantrinitrile, 1, 3, 5-benzotrinitrile, 2, 4, 6-trifluorobenzene-1, 3,5-trinitrile, 1, 3, 5-cyclohexanetrinitrile, 1, 2, 3-propionitrile, 1, 3, 5-benztricyano, 1, 2, 3-tris(2-cyanoxy) propane, and the like.

The sulfone-based additive may include propene sultone (PST), propane sultone (PS), and the like; the lithium salt-based additive may include lithium tetrafluoroborate (LiBF₄), lithium difluorophosphate (LiPO₂F₂), lithium difluoro(fluoromalonato)borate (LFMB), and the like.

### Rechargeable Lithium Battery

In some embodiments, a rechargeable lithium battery includes a positive electrode including a positive electrode active material; a negative electrode including a negative electrode active material; and the electrolyte.

The rechargeable lithium battery may have a charging voltage of 4.5 V or more, or 4.53 V or more. A rechargeable lithium battery using the electrolyte can exhibit excellent cycle-life characteristics even if the charging voltage is increased as described above.

### Positive Electrode Active Material

The positive electrode active material may be a compound capable of reversibly intercalating and deintercalating lithium (a lithiated intercalation compound). In some embodiments, one or more types (or kinds) of composite oxides of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any selected from the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al or a combination thereof.

In some embodiments, the positive electrode active material may include a lithium nickel-based composite oxide represented by Chemical Formula 2:

[Chemical Formula 2] LiₓM¹_{y}M²_{z}M³_{1-y-z}O_{2±a}Xₐ.

In Chemical Formula 2,
0.5≤x≤1.8, 0≤a≤0.1, 0<y≤1, 0≤z≤1, 0<y+z≤1, M¹, M², and M³ are each independently one or more element selected from metals such as Ni, Co, Mn, Al, B, Ba, Ca, Ce, Cr, Fe, Mo, Nb, Si, Sr, Mg, Ti, V, W, Zr, or La, and a combination thereof, and X is one or more element selected from F, S, P, or Cl.

The positive electrode active material corresponding to Chemical Formula 2 may be at least one selected from LiCoO₂, LiNiO₂, LiMnO₂, LiMn₂O₄, LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1).

As an example, the positive electrode active material may be a high nickel-based positive electrode active material having a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high-nickel-based positive electrode active material can achieve high capacity and can be applied to a high-capacity, high-density rechargeable lithium battery.

### Positive Electrode

The positive electrode for a rechargeable lithium battery may include a current collector and a positive electrode active material layer formed on the current collector. The positive electrode active material layer includes a positive electrode active material and may further include a binder and/or a conductive material (e.g., an electrically conductive material).

For example, the positive electrode may further include an additive that can function as a sacrificial positive electrode.

A content of the positive electrode active material may be 90 wt% to 99.5 wt% based on 100 wt% of the positive electrode active material layer, and each content of the binder and the conductive material may be 0.5 wt% to 5 wt% based on 100 wt% of the positive electrode active material layer.

The binder serves to ensure that the positive electrode active material particles adhere to each other and also to adhere the positive electrode active material to the current collector. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is used to impart conductivity (e.g., electrical conductivity) to the electrode, and in the battery being configured, any suitable electronically conductive material can be used as long as it does not cause chemical change (e.g., an undesirable chemical change in the rechargeable lithium battery). Examples of the conductive material may include a carbon-based material such as natural graphite, artificial graphite, carbon black, acetylene black, Ketjen black, a carbon fiber, a carbon nanofiber, and a carbon nanotube; a metal-based material including copper, nickel, aluminum, silver, etc. and in the form of a metal powder and/or a metal fiber; a conductive polymer (e.g., an electrically conductive polymer) such as a polyphenylene derivative; or a mixture thereof.

The current collector may include Al, but is not limited thereto.

### Negative Electrode Active Material

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may be a carbon-based negative electrode active material, for example crystalline carbon, amorphous carbon or a combination thereof. Examples of the crystalline carbon may include graphite such as irregular-shaped, plate-shaped, flake, spherical and/or fibrous natural graphite and/or artificial graphite, and examples of the amorphous carbon may include soft carbon and/or hard carbon, a mesophase pitch carbonized product, calcined coke, and/or the like.

The lithium metal alloy may include an alloy including lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material and/or a Sn-based negative electrode active material may be used as a material capable of doping and dedoping lithium. The Si-based negative electrode active material may include silicon, a silicon-carbon composite, SiOx (0 < x < 2), a Si-Q alloy (wherein Q is an element selected from an alkali metal, an alkaline earth metal, a Group 13 element, Group 14 element (excluding Si), Group 15 element, Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be between the silicon primary particles, and for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material and/or Sn-based negative electrode active material may be used by mixing together with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

The binder serves to adhere the negative electrode active material particles to each other and also helps the negative electrode active material to adhere to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound capable of imparting or increasing viscosity. As this cellulose-based compound, one or more types (or kinds) of carboxymethyl cellulose, hydroxypropylmethyl cellulose, methyl cellulose, and/or an alkali metal salt thereof may be used. The alkali metal may be Na, K, and/or Li.

The dry binder may be a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity (e.g., electrical conductivity) to the electrode, and in the battery being configured, any suitable electronically conductive material can be used as long as it does not cause chemical change (e.g., an undesirable chemical change in the rechargeable lithium battery). Examples thereof may include carbon-based materials such as natural graphite, artificial graphite, carbon black, acetylene black, ketjen black, a carbon fiber, a carbon nanofiber, and/or a carbon nanotube; a metal-based material including copper, nickel, aluminum, silver, etc. in the form of a metal powder and/or a metal fiber; a conductive polymer (e.g., an electrically conductive polymer) such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal (e.g., an electrically conductive metal), and a combination thereof.

### Separator

The rechargeable lithium battery may further include a separator between the negative electrode and the positive electrode, depending on a type (or kind) of the rechargeable lithium battery. Such a separator may, for example, include polyethylene, polypropylene, polyvinylidene fluoride, and/or multi-layers thereof such as, for example, a polyethylene/polypropylene double-layered separator, a polyethylene/polypropylene/polyethylene triple-layered separator, and/or a polypropylene/polyethylene/polypropylene triple-layered separator.

The separator may include a porous substrate and a coating layer containing an organic material, an inorganic material, or a combination thereof on one or both surfaces (e.g., two opposing surfaces) of the porous substrate.

The porous substrate may be a polymer film formed of any one selected from polyolefin such as, for example, polyethylene and polypropylene, polyester such as, for example, polyethylene terephthalate and/or polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, a glass fiber, Teflon, and/or polytetrafluoroethylene, and/or a copolymer and/or a mixture of two or more of them.

The organic material may include a polyvinylidene fluoride-based polymer and/or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto.

The organic material and the inorganic material may be mixed together in one coating layer or may exist in a stacked form of a coating layer including an organic material and a coating layer including an inorganic material.

### Rechargeable Lithium Battery

The accompanying drawing shows an exploded perspective view of a rechargeable lithium battery according to some embodiments of the present disclosure. The rechargeable lithium battery may be classified into cylindrical, prismatic, pouch, or coin-type batteries, and the like depending on its shape. The FIGURE is a schematic sectional view showing a rechargeable lithium battery according to some embodiments, which may be in a form of a prismatic battery. Referring to the FIGURE, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown).

The rechargeable lithium battery according to some embodiments of the present disclosure may be applied to automobiles, mobile phones, and/or various suitable types (or kinds) of electrical devices, but the present disclosure is not limited thereto.

Hereinafter, examples and comparative examples of the present disclosure will be described. The following examples are only examples of embodiments of the present disclosure, and the present disclosure is not limited to the following examples.

### Example 1

### (1) Preparation of Electrolyte

An electrolyte was prepared by mixing together as shown in Table 1. In the following electrolyte compositions, a content "M" of the lithium salt represents an amount (mol) of the lithium salt in a volume (L) of the electrolyte (lithium salt + non-aqueous organic solvent + additive); a content "volume%" of the non-aqueous organic solvent was based on 100 volume% of the total non-aqueous organic solvent; and a content "wt%" of the additive was based on 100 wt% of the total electrolyte (lithium salt + non-aqueous organic solvent + additive).

**Table 1**

| | Lithium salt (M) | Non-aqueous organic solvent (volume%) | | | | | Additive (wt%) |
|---|---|---|---|---|---|---|---|
| | LiPF₆ | EC | PC | PP | MP | MTFP | |
| Comp. Ex. 1 | 1.3 | 10 | 15 | 75 | - | - | FEC 7%, VEC 1%, LiBF₄ 0.2%, PS 3%, SN 2%, HTCN 3%, LFMB 0.2% |
| Comp. Ex. 2 | 1.3 | 10 | 15 | 65 | 10 | - | |
| Comp. Ex. 3 | 1.3 | 10 | 15 | 55 | 20 | - | |
| Ex. 1 | 1.3 | 10 | 15 | 65 | - | 10 | |
| Ex. 2 | 1.3 | 10 | 15 | 60 | | 15 | |
| Ex. 3 | 1.3 | 10 | 15 | 55 | - | 20 | |
| Ex. 4 | 1.3 | 10 | 15 | 50 | - | 25 | |
| Ex. 5 | 1.3 | 10 | 15 | 45 | - | 30 | |
| Ex. 6 | 1.3 | 10 | 15 | 50 | 5 | 20 | |
| Ex. 7 | 1.3 | 10 | 15 | 50 | 10 | 15 | |

The materials used in Table 1 above are as follows.
1) Lithium salt
   LiPF₆: Lithium hexafluorophosphate
2) Carbonate-based solvent
   EC: Ethylene carbonate
   PC: Propylene carbonate
3) Propionate-based solvent
   PP: Propyl propionate
   MP: Methyl propionate
   MTIP: Methyl 3,3,3-trifluoropropionate
4) Other additives
   FEC: Fluoroethylene carbonate
   VEC: Vinylethylene carbonate
   LiBF₄: Lithium tetrafluoroborate
   PS: Propanesultone
   SN: Succinonitrile
   HTCN: 1,3,6-hexanetrinitrile
   LFMB: Lithium difluoro(fluoromalonato)borate

### (2) Manufacturing of rechargeable lithium battery cells

LiCoO₂ as a positive electrode active material, polyvinylidene fluoride as a binder, and Ketjen black as a conductive material were mixed together respectively in a weight ratio of 98.5:0.75:0.75, and then, dispersed in N-methyl pyrrolidone to prepare a positive electrode active material slurry.

The positive electrode active material slurry was coated on a 14 µm-thick Al foil at a loading amount of 36.72 mg/cm², dried at 110 °C, and then compressed to manufacture a positive electrode.

Artificial graphite was used as a negative electrode active material, and the negative electrode active material, a styrene-butadiene rubber binder, and carboxylmethyl cellulose in a weight ratio of 97:1:2 were dispersed in distilled water to prepare a negative electrode active material slurry.

The negative electrode active material slurry was coated on a 10 µm-thick Cu foil at a loading amount of 20.76 mg/cm², dried at 100 °C, and then pressed to manufacture a negative electrode.

An electrode assembly was manufactured by assembling the manufactured positive electrode and negative electrode and a 16 µm-thick polyethylene separator, the electrode assembly was accommodated in a pouch, and a 2032 coin-type rechargeable lithium battery cell was manufactured by injecting the electrolyte of the Example 1.

### Evaluation Example 1: Capacity Retention Rate of Rechargeable Lithium Battery Cell

The rechargeable lithium battery cells of Examples 1 to 7 and Comparative Examples 1 to 3 were constant current-charged to a voltage of 4.53 V (vs. Li) at a current rate of 1.5 C at 25 °C after the formation and subsequently, cut off at a current rate of 0.075 C, while maintaining the 4.53 V in a constant voltage mode. Subsequently, the cells were discharged to a voltage of 3 V (vs. Li) at a constant current rate of 0.75 C. This charge/discharge cycle was 200 times repeated.

In all the charge and discharge cycles, a pause of 10 minutes was set after each charge/discharge cycle.

The charge/discharge experiment results are shown in Table 2. A capacity retention rate at the n^{th} cycle is defined according to Equation 1. Capacity retention rate = [Discharge capacity in nth cycle / Discharge capacity in 1st cycle] × 100

**Table 2**

| | Comparative Examples | | | Examples | | | | | | |
|---|---|---|---|---|---|---|---|---|---|---|
| | 1 | 2 | 3 | 1 | 2 | 3 | 4 | 5 | 6 | 7 |
| 50^{th} cycle (%) | 93.5 | 94.4 | 94.4 | 94.8 | 94.6 | 95.3 | 92.5 | 93.8 | 96.1 | 94.3 |
| 100^{th} cycle (%) | 84.3 | 83.3 | 77.8 | 89.5 | 88.9 | 92.2 | 87.0 | 87.9 | 91.6 | 89.2 |
| 200^{th} cycle (%) | 58.3 | 55.4 | 42.6 | 57.7 | 36.2 | 37.6 | 63.0 | 62.7 | 67.3 | 57.8 |

Referring to Table 2, the rechargeable lithium battery cells of Comparative Examples 1 to 3, compared with the cells of Examples 1 to 7, exhibited a sharply deteriorated cycle-life, as the charge and discharge cycles increased.

While the present disclosure is not limited to any particular mechanism or theory, this is presumed to be because a propionate-based solvent including alkyl fluorinated propionate and propyl propionate had higher electrochemical stability than a carbonate-based solvent and reduced a side reaction event though charge/discharge cycles of the rechargeable lithium battery cells were repeated.

### Evaluation Example 2: Confirmation of Lithium Salt Decomposition Products after High-temperature Cycle-life of Rechargeable Lithium Battery Cell

After evaluating the high temperature cycle-life of the rechargeable lithium battery cells, the negative electrodes were dissembled therefrom and subject to X-ray photoelectron spectroscopy (XPS) analysis to check whether a decomposition product of lithium salt in the electrolyte was attached on the negative electrode surface.

Representatively, the cells of Comparative Examples 1 to 3 and Examples 1 and 3 were checked, and the results are shown in Table 3.

**Table 3 (unit: wt%)**

| | Comparative Example | | Example |
|---|---|---|---|
| | 1 | 3 | 3 |
| C | 90.9 | 36.8 | 94.5 |
| O | 55 | 18. | 3.0 |
| F | 3.0 | 13.9 | 2.3 |
| P | 0.6 | 1.2 | 0.2 |

Referring to Table 3, compared with Comparative Examples 1 and 3, Example 3 exhibited small detected amounts of F and P, which are the decomposition products of lithium salt (LiPF₆).

Accordingly, the propionate-based solvent including alkyl fluorinated propionate and propyl propionate had higher electrochemical stability than the carbonate-based solvent and reduced a side reaction on the negative electrode surface.

### <Description of Symbols>

100: rechargeable lithium battery
10: positive electrode
20: negative electrode
30: separator
40: electrode assembly
50: case
70: electrode tab

## Claims

1. An electrolyte for a rechargeable lithium battery (100), comprising:
a non-aqueous organic solvent and a lithium salt,
wherein the non-aqueous organic solvent includes two or more propionate-based solvents, and
the propionate-based solvents comprise alkyl fluorinated propionate and propyl propionate.

2. The electrolyte as claimed in claim 1, wherein:
the alkyl fluorinated propionate is represented by Chemical Formula 1: 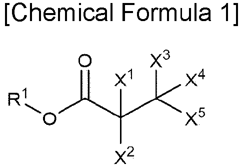
wherein, in Chemical Formula 1,
R¹ is a C1 to C10 alkyl group, and
X¹ to X⁵ are the same or different, and are each independently a hydrogen atom or a fluorine atom, wherein at least one of X¹ to X⁵ is a fluorine atom.

3. The electrolyte as claimed in claim 2, wherein:
R¹ is a methyl group.

4. The electrolyte as claimed in claim 2 or 3, wherein:
three or more selected from X¹ to X⁵ are fluorine atoms.

5. The electrolyte as claimed in claim 2, wherein:
the alkyl fluorinated propionate represented by Chemical Formula 1 is represented by Chemical Formula 1-1, Chemical Formula 1-2, or Chemical Formula 1-3:

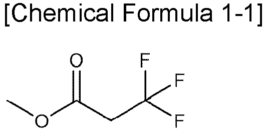

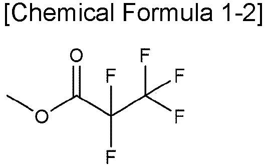

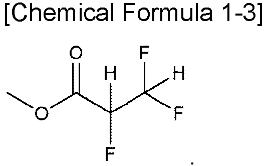

6. The electrolyte as claimed in any one of the preceding claims, wherein:
the alkyl fluorinated propionate is included in an amount of 1 volume% to 30 volume% based on 100 volume% of the non-aqueous organic solvent.

7. The electrolyte as claimed in any one of the preceding claims, wherein
the propyl propionate is included in an amount of 30 volume% to 90 volume% based on 100 volume% of the non-aqueous organic solvent.

8. The electrolyte as claimed in any one of the preceding claims, wherein:
a volume ratio of the alkyl fluorinated propionate and the propyl propionate is 1:1 to 1:9.

9. The electrolyte as claimed in any one of the preceding claims, wherein:
the propionate-based solvent further comprises methyl propionate, ethyl propionate, or a combination thereof.

10. The electrolyte as claimed in any one of the preceding claims, wherein:
the propionate-based solvent is included in an amount of 50 to 90 volume% based on 100 volume% of the non-aqueous organic solvent.

11. The electrolyte as claimed in any one of the preceding claims, wherein:
the non-aqueous organic solvent further comprises a carbonate-based solvent.

12. The electrolyte as claimed in claim 11, wherein:
a volume ratio of the carbonate-based solvent and the propionate-based solvent is 1:2 to 1:3.

13. The electrolyte as claimed in any one of the preceding claims, wherein:
the lithium salt comprises one or more selected from LiPF₆, LiBF₄, LiSbF₆, LiAsF₆, LiClO₄, LiAlO₂, LiAlC₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₚF₂ₚ₊₁SO₂)(C_{q}F_{2q+1}SO₂) (wherein p and q are integers from 1 to 20), lithium trifluoromethane sulfonate, lithium tetrafluoroethanesulfonate, lithium difluorobis(oxalato)phosphate. (LiDFOB), and
lithium bis(oxalato)borate (LiBOB).

14. The electrolyte as claimed in any one of the preceding claims, wherein:
the electrolyte further comprises a carbonate-based additive, a sultone-based additive, a nitrile-based additive, a lithium salt-based additive, or a combination thereof.

15. A rechargeable lithium battery (100), comprising:
a positive electrode (10) comprising a positive electrode active material;
a negative electrode (20) comprising a negative electrode active material; and
the electrolyte as claimed in claim 1.
